# EUROPEAN PATENT APPLICATION

(11) **EP 2 343 151 A1**
(43) Date of publication of application: **13.07.2011**
(21) Application number: 10194828.9
(22) Date of filing: 14.12.2010
(51) Int. Cl.: B23P 15/04, F01D 5/02, F01D 5/06

(54) **Rotating hardware and process therefor**

(30) Priority: 22.12.2009 US 644068
(71) Applicant: General Electric Company, Schenectady, NY 12345 (US)
(72) Inventor: NOE, Daniel David, Cincinnati, OH 45215 (US); WHEATLEY, John Todd, Cincinnati, OH 45215 (US)
(74) Representative: Gray, Thomas

(57) **Abstract**

A process of fabricating rotating hardware (30) and rotating hardware (30) formed thereby. The process includes fabricating at least two members (50,52) that together define at least two portions (32,34) of a component (30). Each member (50,52) has an interface surface at which the members (50,52) can be joined to locate a first (32) of the portions (32,34) in a radially outward direction from a second (34) of the portions (32,34). The members (50,52) are joined together so that the interface surfaces thereof form a joint interface (44) located within a pad region (46) that has a axial thickness that is greater than a contiguous region (38) of the component (30). The joint interface (44) is not perpendicular to the axial and radial directions of the component (30). The pad region (46) is defined by embossments (48a,48b) that are offset from each other in the radial direction of the component (30) so as to partially but not completely overlap each other in the axial direction of the component (30).

## Description

### BACKGROUND OF THE INVENTION

The present invention generally relates to fabrication processes that include a joining operation. More particularly, this invention is directed to a technique for fabricating rotating hardware, as an example, rotating components of a turbomachine, joining techniques used in their fabrication, and the hardware formed thereby.

Components within the combustor and turbine sections of a gas turbine engine are often formed of superalloy materials in order to achieve acceptable mechanical properties while at elevated temperatures resulting from the hot combustion gases produced in the combustor. Higher compressor exit temperatures in modem high pressure ratio gas turbine engines can also necessitate the use of high performance superalloys for compressor components, including spools, disks and other components. Suitable alloy compositions and microstructures for a given component are dependent on the particular temperatures, stresses, and other conditions to which the component is subjected. For example, the rotating hardware of a gas turbine engine, including compressor spools, compressor disks and turbine disks, are typically formed of superalloys that must undergo carefully controlled forging, heat treatments, and surface treatments to produce a controlled grain structure and desirable mechanical properties. Notable superalloys for these applications include gamma prime (y') precipitation-strengthened nickel-base superalloys, a nonlimiting example of which is René 88DT (R88DT; U.S. Patent No. 4,957,567 to Krueger et al.).

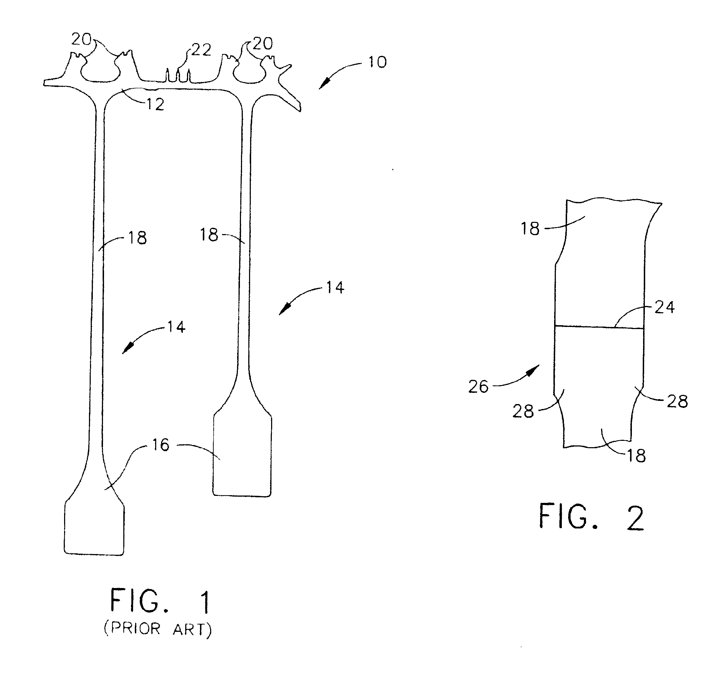

FIG. 1 represents in cross-section a portion of a compressor booster shaft or spool 10 for a gas turbine engine. It should be appreciated that, because of the axisymmetric configuration of the compressor section, there is a diametrically opposite portion of the spool 10 that is not shown in FIG. 1 but is a mirror image of the portion shown in FIG. 1. The spool 10 includes a rim 12 and disks (wheels) 14, each of the latter comprising a bore 16 at its radially innermost extent and a relatively thinner web 18. The rim 12 has features 20 adapted for securing compressor blades (not shown), as well as annular seals 22 between blade stages. The bores 16 provide the structure by which the spool 10 is mounted to a shaft (not shown) driven by the turbine section of the engine. Other aspects of the spool 10 and the construction and operation of the compressor and engine are known in the art and therefore will not be discussed here in any detail.

The spool 10 of FIG. 1 is presented as a unitary forging of a single alloy, and is representative of spools used in aircraft engines. The weight and cost of single-alloy forgings have driven the desire to develop materials, fabrication processes, and hardware designs capable of reducing forging weight and costs for rotating hardware of gas turbines. One such approach is prompted by the fact that the bores and webs of compressor spools and turbine disks have lower operating temperatures than their rims, and therefore can be formed of alloys with lesser properties than those required at the rims. To implement such a design, a weld or other metallurgical joint is necessary within the web to join the different materials. FIG. 2 is representative of the weld joint interface 24 of such a weld joint.

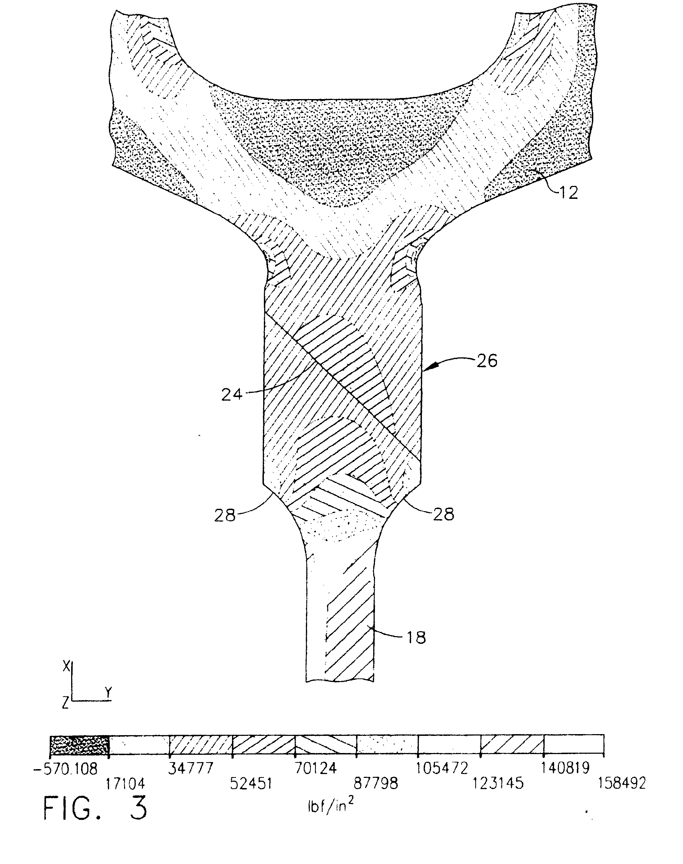

To meet the stringent life requirements associated with a weld, the radial stress in a web weld joint is preferably much less than the stress in the web of a rotating component formed from a single-alloy forging. For this purpose, FIG. 2 shows the weld joint interface 24 as located in a thickened region of the web 18, referred to herein as a weld pad 26, which is defined by raised regions or embossments 28 on opposite surfaces of the web 18. The weld joint interface 24 is perpendicular to the surfaces of both embossments 28. FIG. 3 represents a similar approach, but differs from FIG. 2 by orienting the weld joint so that its interface 24 is not perpendicular to the surfaces of both embossments 28. The decrease in radial stress achieved with the design shown in FIGS. 2 and 3 is based on increasing the cross-sectional area of the region (weld joint) requiring stress reduction. In particular, this approach uses a simple force/area calculation to lower stress. For example, assuming a constant radial force, stress is reduced by half if the cross-sectional area is doubled within the weld pad 26. FIG. 3, which includes data (1bf/in²) obtained from a finite element analysis, evidences an approximately 50% reduction in stresses at the weld joint interface 24 resulting from the weld pad 26 being about twice as thick as the remainder of the web 18.

Though symmetric embossments 28 of the types shown in FIGS. 2 and 3 reduce radial stresses at the weld joint of the web 18, the weld pad 26 can significantly increase the weight of the web 18 beyond what is acceptable or desired for the rotating hardware.

### BRIEF DESCRIPTION OF THE INVENTION

The present invention provides a process of fabricating rotating hardware, as an example, rotating components of turbomachines, joining techniques used in their fabrication, and rotating hardware formed thereby.

According to a first aspect of the invention, a process for fabricating a rotating component includes fabricating at least two members that together define at least two portions of the component. Each member comprises an interface surface at which the members can be joined to locate a first of the portions in a radially outward direction from a second of the portions. The members are joined together so that the interface surfaces thereof form a joint interface located within a pad region located in at least one of the portions of the component. The pad region has a thickness in an axial direction of the component that is greater than a contiguous region of the component located in a radial direction from the pad region. The interface surfaces of the members are formed so that the joint interface is not perpendicular to the axial and radial directions of the component. The pad region is defined by embossments located on opposite axial surfaces of the component. The embossments are offset from each other in the radial direction of the component so as to partially but not completely overlap each other in the axial direction of the component.

Another aspect of the invention is a rotating component having a rotational axis and comprising at least two members that are joined together to define at least two portions of the component. A first of the portions is disposed in a radially outward direction from a second of the portions. A pad region is located in at least one of the portions of the component and has a thickness in an axial direction of the component that is greater than a contiguous region of the component located in a radial direction from the pad region. The pad region is defined by embossments that are located on opposite axial surfaces of the component and offset from each other in the radial direction of the component so as to partially but not completely overlap each other in the axial direction of the component. The members are joined to form a joint interface located within the pad region and oriented so as to not be perpendicular to the axial and radial directions of the component.

A significant advantage of the invention is the ability to reduce radial stresses at the joint interface, while incurring minimal additional weight. The invention also facilitates the use of different materials tailored or otherwise particularly well suited for different regions of a rotating component. The invention is therefore capable of allowing greater design flexibility in material selection by employing a joining technique that has a minimal impact on the final weight and performance of the component. As such, the invention is well suited for use in rotating hardware of the type employed in gas turbines and other turbomachines and rotating machinery.

Other aspects and advantages of this invention will be better appreciated from the following detailed description.

### BRIEF DESCRIPTION OF THE DRAWINGS

There follows a detailed description of embodiments of the invention by way of example only with reference to the accompanying drawings, in which:
FIG. 1 represents a fragmentary cross-sectional view of a single-alloy forged spool of a type that can be used in a high-bypass gas turbine engine in accordance with the prior art.
FIG. 2 represents a portion of a web of a spool, such as of the type shown in FIG. 1, but modified to include a weld pad and a weld joint by which the web is joined to a rim of the spool to allow for fabrication of the spool from multiple forgings in accordance with existing art.
FIG. 3 represents a portion of a spool web similar to that represented in FIGS. 1 and 2, and on which data from a finite element analysis are overlaid to show relative stress levels within the rim, web, and weld pad.
FIG. 4 represents a fragmentary cross-sectional view of a multi-forging spool in accordance with an embodiment of the invention.
FIG. 5 represents a detailed view of a weld pad region within a web of the spool represented in FIG. 4.
FIG. 6 represents data from a finite element analysis overlaid on the weld pad region of FIG. 5 to show relative stress levels within the rim, web, and weld pad.

### DETAILED DESCRIPTION OF THE INVENTION

The present invention will be described with reference to rotating hardware of the type used in high-bypass gas turbine engine, though it should be understood that the teachings and benefits of the invention can be adapted and applied to a wide range of applications.

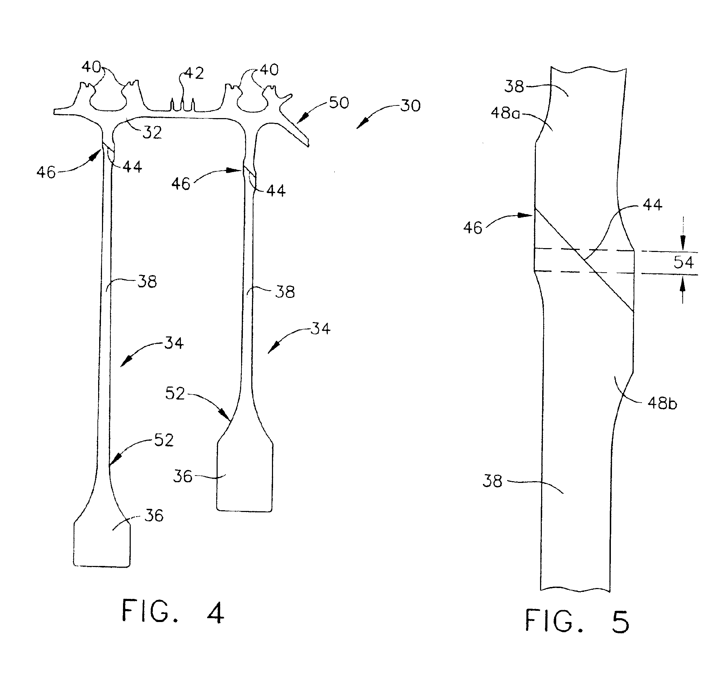

FIG. 4 schematically represents a fragmentary cross-sectional view of a booster shaft or spool 30 of a type used in compressor sections of high-bypass gas turbine engines. Similar to the prior art spool 10 represented in FIG. 1, the spool 30 includes a rim 32 that is located radially outward of multiple disks (wheels) 34, the latter of which comprise bores 36 at their radially innermost extents and relatively thinner webs 38 between the rim 32 and bores 36. The rim 32 has features 40 adapted for securing compressor blades (not shown) and annular seals 42 between blade stages. The bores 36 of the wheels 34 enable the spool 30 to be mounted to a shaft (not shown) driven by the turbine section of the engine, such that the spool 30 (and hardware mounted thereto) rotates about an axis of rotation (not shown) of the spool 30. Other aspects of the spool 30 and the construction and operation of the compressor and engine are known in the art and therefore will not be discussed here in any detail.

In contrast to the spool 10 of FIG. 1, the spool 30 is represented in FIG. 4 as fabricated from multiple forgings 50 and 52, enabling the spool 30 to be produced from multiple alloys. In particular, the multiple forgings 50 and 52 can be produced from different alloys that enable the rim 32 and wheels 34 to be particularly tailored or otherwise more optimally suited for the operating conditions that exist in their specific regions within the compressor. For example, the wheels 34 of the spool 30 will usually have lower operating temperatures than the rim 32, and therefore the forgings 52 that form the bulk of each wheel 34 can be formed of alloys with lesser properties than the properties required for the forging 50 that forms the rim 32. In the implementation of this design shown in FIG. 4, the forgings 50 and 52 are represented as being joined together. More particularly, the forging 50 that defines the rim 32 and the radially outermost portions of the wheels 34 and each forging 52 that defines the bulk of each wheel 34 are fabricated to have complementary faying surfaces that, when welded together to form a weld joint, define a weld joint interface 44. In FIG. 4, the weld joints and their interfaces 44 are shown as being located within weld pads 46 that are formed entirely within the webs 38.

According to a preferred aspect of the invention, the weld pads 46 and the weld joint interfaces 44 are configured to promote the ability of the spool 30 to meet stringent life requirements for welds subjected to high radial stresses, as is this case with the spool 30 and other rotating hardware of a gas turbine. The weld joint interfaces 44 represented in FIG. 4 are not perpendicular to the opposite axial surfaces of their respective webs 38 (and therefore not perpendicular to the radial directions of the webs 38 and not parallel to the rotational axis of the spool 30). Instead, the interfaces 44 are shown as oriented at an angle of about forty-five degrees to the radial and axial directions of the spool 30. A preferred range for the interface angle is generally about 30 to about 60 degrees to the axial direction of the spool 30, though lesser and greater angles could be used.

In contrast to the symmetric weld pad 26 represented in FIGS. 2 and 3, the weld pad 46 represented in FIG. 4 may be described as asymmetric as a result of the weld pad 46 being defined by two embossments 48a and 48b that are not directly opposite each other on the web 38, as more clearly evident from FIG. 5. In particular, whereas the embossments 28 of FIGS. 2 and 3 are characterized by a 100% overlap in the axial direction of the spool 10, the embossments 48a and 48b only partially overlap each other in the axial direction of the spool 30. In FIG. 5, the embossments 48a and 48b have an overlap 54 of approximately 20% of the radial dimension of each embossment 48a and 48b, with the remainder of the embossments 48a and 48b being radially offset in opposite directions from each other. Though the overlap 54 is not necessarily required, the radially innermost extent of the radially outermost embossment (48a in FIG. 5) is preferably at least axially aligned with the radially outermost extent of the radially innermost embossment (48b in FIG. 5), corresponding to an overlap of about 0%. The embossments 48a and 48b may overlap each other by as much as about 70% of the radial dimension of each embossment 48a and 48b. As evident from FIG. 5, the weld joint interface 44 is required to intersect the axial surface of each embossment 48a and 48b.

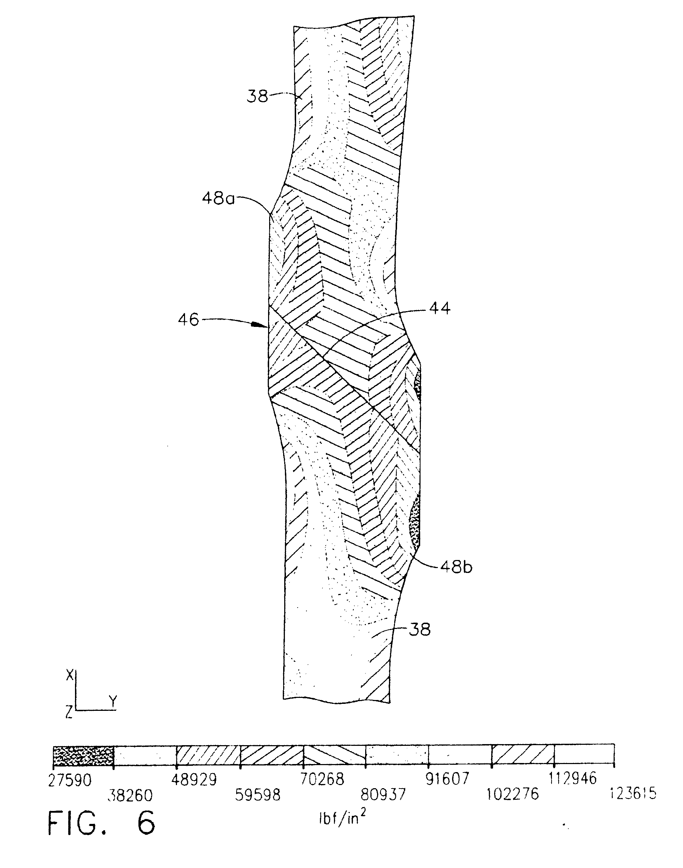

As with the weld pads 26 of FIGS. 2 and 3, the weld pad 46 of FIGS. 4 and 5 is formed by an axially thickened region of the web 38 resulting from the embossments 48a and 48b that project in the axial direction from the adjacent surfaces of their respective webs 38, such that the pad 46 has an axial thickness that is greater than either of the two radially contiguous regions of the web 38. However, the decrease in radial stress achieved with weld pad 46 of FIG. 4 is significantly greater than that for the designs shown in FIGS. 2 and 3. Similar to FIG. 3, FIG. 6 represents data (Ibf/in²) obtained from a finite element analysis, and evidences that stresses can be reduced to levels comparable to the design of FIG. 3 when subjected to essentially identical stress conditions. However, in contrast to the weld pad 26 of FIG. 3, the weld pad of FIG. 6 achieves this reduction with a weld pad 46 whose axial thickness relative to the surrounding web 38 is considerably less than the relative increase in axial thickness required for the weld pad 26 of FIG. 3 to attain a similar stress reduction. As a representative comparison, the weld pad 26 of FIG. 3 has an axial thickness of about twice the axial thickness of the contiguous portion of the web 18, whereas the axial thickness of the weld pad 46 of FIG. 5 is significantly less twice the axial thickness of the contiguous portion of the web 38. In FIG. 6, the axial thickness of the weld pad 46 is only about 20% greater than the axial thickness of the radially contiguous portions of the web 38. As such, in contrast to the simple force/area calculation for obtaining reduced stresses employed by FIGS. 2 and 3, the asymmetric/offset configuration of the embossments 48a and 48b of FIGS. 4 through 6 achieve further reductions in stresses beyond that which would be predicted with a simple force/area calculation. For example, the weld pad 26 of FIG. 3 reduces stresses by roughly half by having an axial thickness of about 100% greater than the surrounding web 18, whereas a similar reduction in stresses is achieved with the weld pad 46 of FIGS. 4 through 6 with an axial thickness of only about 20% greater than the surrounding web 38. As such, the asymmetric embossments 48a and 48b of FIGS. 4 through 6 are capable of significantly reducing radial stresses at the weld joint interface 44 of the web 38, while incurring far less additional weight. Accordingly, the weld pad 46 is well suited for use in rotating hardware of the type represented in FIG. 4, as well as other rotating hardware of gas turbines and other turbomachines and rotating machinery.

While not wishing to be held to any particular theory, finite element analysis has indicated that asymmetric/offset weld pads of the type represented in FIGS. 4 through 6 achieve local reductions in radial stresses where the weld joint interface 44 intersects the opposite surfaces of the web 38. More particularly, the data presented in FIG. 6 evidence that, due to the offset embossments 48a and 48b represented in FIGS. 4 through 6, the asymmetric weld pad 46 achieves a combination of compressive stresses, reduced stresses where the weld joint interface 44 intersects the surfaces of the embossments 48a and 48b, and radial stress shielding at the mating surfaces of the weld joint interface 44 so that the majority of the radial stresses are located at and adjacent the center of the web 38, instead of at the axial surfaces of the web 38. This combination lowers the overall radial stress levels at the weld joint interface 44, promoting the ability of the weld joint to meet stringent life requirements by slowing crack development and growth. Higher radial stresses are believed to be better tolerated at the center of the web 38 because a crack within the interior of the web 38 is in a vacuum and will propagate much slower than a crack at an external surface of the web 38.

In view of the above, it is believed that asymmetric weld pads of the type described above permit the use of materials tailored or otherwise particularly well suited for specific regions of a rotating component. Consequently, the entire component need not be formed from a single material whose properties must meet the most demanding operating conditions of limited regions of the component, but far exceed the properties required for other regions of the component. The invention is also capable of allowing greater design flexibility in material selection by employing a joining technique that has a minimal impact on the final weight and performance of the component.

While the invention has been described in terms of a specific embodiment, it is apparent that other forms could be adopted by one skilled in the art. Therefore, the scope of the invention is to be limited only by the following claims.

For completeness, various aspects of the invention are now set out in the following numbered clauses:
1. A process of fabricating a rotating component having a rotational axis, the process comprising:
   fabricating at least two members that together define at least two portions of the component, each of the members comprising an interface surface at which the members can be joined to locate a first of the portions in a radially outward direction from a second of the portions; and
   joining the members together so that the interface surfaces thereof form a joint interface located within a pad region located in at least one of the portions of the component, the pad region having a thickness in an axial direction of the component that is greater than a contiguous region of the component that is located from the pad region in a radial direction of the component, the interface surfaces of the members being formed so that the joint interface is not perpendicular to the axial and radial directions of the component, the pad region being defined by embossments located on opposite axial surfaces of the component, the embossments being offset from each other in the radial direction of the component so as to partially but not completely overlap each other in the axial direction of the component.
2. The process according to clause 1, wherein the embossments overlap each other by about 0% to about 70%.
3. The process according to clause 1, wherein the pad region has an axial thickness of less than twice the axial thickness of the contiguous region of the component.
4. The process according to clause 1, wherein the joint interface is disposed at an angle of about 30 to about 60 degrees to the axial and radial directions of the component.
5. The process according to clause 1, wherein the joint interface intersects axial surfaces of the embossments.
6. The process according to clause 1, wherein the members are forgings.
7. The process according to clause 1, wherein the members are formed of different alloys.
8. The process according to clause 1, wherein the rotating component is a component of a gas turbine engine, and the portions comprise a rim and at least one wheel of the component
9. The process according to clause 8, wherein the pad region and the contiguous region of the component are entirely located within the wheel.
10. The process according to clause 8, wherein the component is a compressor spool.
11. The process according to clause 8, further comprising installing the component in a gas turbine engine so that the first portion of the component is located in a radially outward direction from the second portion.
12. A rotating component having a rotational axis, the component comprising:
   at least two members that are joined together to define at least two portions of the component, a first of the portions being disposed in a radially outward direction from a second of the portions;
   a pad region located in at least one of the portions of the component, the pad region having a thickness in an axial direction of the component that is greater than a contiguous region of the component that is located from the pad region in a radial direction of the component, the pad region being defined by embossments located on opposite axial surfaces of the component, the embossments being offset from each
   other in the radial direction of the component so as to partially but not completely overlap each other in the axial direction of the component;
   a joint interface at which the members are joined, the joint interface being located within the pad region and oriented so as to not be perpendicular to the axial and radial directions of the component.
13. The rotating component according to clause 12, wherein the embossments overlap each other by about 0% to about 70%.
14. The rotating component according to clause 12, wherein the joint interface intersects axial surfaces of the embossments.
15. The rotating component according to clause 12, wherein the members are forgings.
16. The rotating component according to clause 12, wherein the members are formed of different alloys.
17. The rotating component according to clause 12, wherein the rotating component is a component of a gas turbine engine.
18. The rotating component according to clause 17, wherein the portions comprise a rim and at least one wheel of the component
19. The rotating component according to clause 18, wherein the pad region and the contiguous region of the component are entirely located within the wheel.
20. The rotating component according to clause 18, wherein the component is a compressor spool.

## Claims

1. A process of fabricating a rotating component (30) having a rotational axis, the process comprising fabricating at least two members (50,52) that together define at least two portions (32,34) of the component (30), each of the members (50,52) comprising an interface surface at which the members (50,52) can be joined to locate a first (32) of the portions (32,34) in a radially outward direction from a second (34) of the portions (32,34), the process **characterized by**:
joining the members (50,52) together so that the interface surfaces thereof form a joint interface (44) located within a pad region (46) located in at least one of the portions (32,34) of the component (30), the pad region (46) having a thickness in an axial direction of the component (30) that is greater than a contiguous region (38) of the component (30) that is located from the pad region (46) in a radial direction of the component (30), the interface surfaces of the members (50,52) being formed so that the joint interface (44) is not perpendicular to the axial and radial directions of the component (30), the pad region (46) being defined by embossments (48a,48b) located on opposite axial surfaces of the component (30), the embossments (48a,48b) being offset from each other in the radial direction of the component (30) so as to partially but not completely overlap each other in the axial direction of the component (30).

2. The process according to claim 1, wherein the embossments (48a,48b) overlap each other by about 0% to about 70%.

3. The process according to claim 1 or 2, wherein the pad region (46) has an axial thickness of less than twice the axial thickness of the contiguous region (38) of the component (30).

4. The process according to any one of claims 1 to 3, wherein the joint interface (44) intersects axial surfaces of the embossments (48a,48b).

5. The process according to any one of claims 1 to 4, wherein the members (50,52) are formed of different alloys.

6. The process according to any one of claims 1 to 5, wherein the rotating component (30) is a component of a gas turbine engine, and the portions (32,34) comprise a rim (32) and at least one wheel (34) of the component (30)

7. The process according to claim 6, wherein the pad region (46) and the contiguous region (38) of the component (30) are entirely located within the wheel (34).

8. The process according to any one of claims 1 to 7, further comprising installing the rotating component (30) in a gas turbine engine so that the first portion (32) of the component (30) is located in a radially outward direction from the second portion (34).

9. The rotating component (30) formed by any of the processes of claims 1 to 9.

10. The rotating component (30) according to claim 9, wherein the component (30) is a compressor spool (30).

11. A rotating component having a rotational axis, the component comprising:
at least two members that are joined together to define at least two portions of the component, a first of the portions being disposed in a radially outward direction from a second of the portions;
a pad region located in at least one of the portions of the component, the pad region having a thickness in an axial direction of the component that is greater than a contiguous region of the component that is located from the pad region in a radial direction of the component, the pad region being defined by embossments located on opposite axial surfaces of the component, the embossments being offset from each other in the radial direction of the component so as to partially but not completely overlap each other in the axial direction of the component;
a joint interface at which the members are joined, the joint interface being located within the pad region and oriented so as to not be perpendicular to the axial and radial directions of the component.

12. The rotating component according to claim 11, wherein the embossments overlap each other by about 0% to about 70%.

13. The rotating component according to claim 11 or 12, wherein the joint interface intersects axial surfaces of the embossments.

14. The rotating component according to any of claims 11 to 13, wherein the members are forgings.

15. The rotating component according to any of claims 11 to 14, wherein the members are formed of different alloys.
